# EUROPEAN PATENT SPECIFICATION

(11) **EP 0 285 713 B1**
(45) Date of publication and mention of the grant of the patent: **16.06.1993**
(21) Application number: 87302990.4
(22) Date of filing: 06.04.1987
(51) Int. Cl.: C09D 17/00, C09B 67/00, C09D 11/02

(54) **Direct process for the production of printing inks**
Direktes Verfahren zur Herstellung von Druckfarben
Procédé direct de fabrication d'encres d'imprimerie

(43) Date of publication of application: 12.10.1988
(73) Proprietor: SUN CHEMICAL CORPORATION, New York New York (US)
(72) Inventor: Gleason, Francis E., Cincinnati, Ohio (US); Emmert, Deborah A., Houston Texas 77082 (US); McClure, Matthew, Cincinnati, Ohio (US); McEwan, Ronald W., Westchester, Ohio (US)
(74) Representative: Lawrence, Peter Robin Broughton

(56) References cited:
- EP-A- 0 219 323
- FR-A- 2 325 699
- GB-A- 1 212 346
- US-A- 3 980 488
- US-A- 4 309 320
- "THE PRINTING INK MANUAL", pp 592-594, 600-604 (1988)
- PRINTING INK HANDBOOK, 3rd Ed. (1976), pp. 17, 18
- KIRK OTHMER - ENCYCLOPEDIA OF CHEMICAL TECHNOLOGY, 3rd Ed. (1981), vol. 13, pp. 382-383
- PIGMENT HANDBOOK (1973), vol. III, pp. 447-455

## Description

Printing inks are conventionally prepared by a series of steps that comprise (1) reacting the starting ingredients for the pigment in an agitated vessel to obtain a slurry containing about 1 to 3 percent of pigment in mother liquor, (2) filtering and washing the liquid reaction product of step (1) with water to remove the mother liquor and decrease the amount of water-soluble by-products to an acceptable level, forming a presscake that contains about 20 percent of pigment and 80 percent of water, (3) putting the presscake from step (2) into a high horsepower, high shear mixer for at least 15 hours to transfer the pigment from the aqueous phase to a non-aqueous phase to effect complete dispersion of the pigment in the non-aqueous phase, and (4) finally adjusting the batch by adding materials to insure proper rheology and color characteristics to meet the requirements of the printing ink manufacturer.

The pigment flush product from step (4) is then sold to the manufacturer of printing inks who then, at a different location, (5) mixes the pigment with additional varnish, e.g., resin, solvent, and, optionally, a drying oil, and conventional additives to prepare a printing ink that meets the customer's requirements.

Alternatively, the pigment presscake from step (2) may be dried, the dry product mixed with the non-aqueous components, and the resulting paste subjected to high shear in dispersion equipment, such as a three-roll mill.

These processes are for instance described in "The Printing Ink Manual" 1988 pp 592-594, 600-604, "Printing Ink Handbook" 3rd ed (1976) p 17-18, Kirk-Othmer "Encyclopedia of Chemical Technology 3rd ed (1981) vol 13 p 382-383 and "Pigment Handbook" ed Temple C Patton (1973) vol III, pp 447-455.

DE-A-23 60 093 (to Deutsch Gold- und Silver-Scheideanstalt), which is an application for a patent of addition to DE-C-19 37 832, describes an improved process for the preparation of binder containing pigment compositions in flake or powder form with complete distribution of pigment, in which a pigment concentrate with a content of 30-80%, preferably 35-60% by weight of a non-plastic binder which is solid at room temperature is dried and the dried mass is optionally pulverised. DE-C-19 37 832 describes a flushing process in which a water-containing pigment mass is subjected to a phase conversion by the addition of an optionally solvent-containing pigment binder and optionally with the use of a flushing aid. The ratio between pigment, binder and optionally solvent is selected so as to obtain a highly plastic pigment concentrate in a workable and deformation-resistant consistency and in which the cohesive force is superior to the adhesive force. According to an example in DE-A-23 60 093, which refers to DE-C-19 37 832, the starting material for the flushing process (the phase conversion) was an aqueous pigment mass comprising 45% by weight of ferrocyanide blue (Prussian blue).

US-A-3,980,488 (to the Sherwin-Williams Company) describes the flushing of partially milled organic pigments obtained in the form of a press-cake after filtering an aqueous slurry, into an organic vehicle in the presence of a breaching agent. According to the Examples in said US patent, the starting material for the flushing process was a press-cake containing 40 to 50% by weight of water.

US-A-4,340,431 (to BASF Wyandotte Corporation) describes a method for transferring an organic pigment from an aqueous pulp of the pigment into a water-immiscible organic vehicle by mixing the aqueous pulp and the vehicle until a major part of the water in the pulp separates, and the separation is improved by means of a petroleum sulphonate additive and at least one additive which is a sulphonated sperm oil, sulphated sperm oil or mitures thereof with the vehicle and the pigment. In all examples, the pulp comprises 24% by weight of pigment.

US-A-2,822,283 (to Dehydag) describes a method for transferring an inorganic pigment from an aqueous paste into a water-immiscible liquid in the presence of a small quantity of a substituted cyclohexyl amine. According to the examples, the aqueous paste comprises 30% and 20% by weight of inorganic pigment and the amount of water-immiscible liquid was of the same order as that of the aqueous paste, which means that the ratio between the water-immiscible phase and the aqueous paste was 1:0.7 and 1:1.1, respectively.

FR-B-2,302,328 (to ICI) describes an aqueous emulsion of pigment, alkydes, petroleum and detergent; the inorganic pigment is used in dry state.

DE-A-3,121,765 (to BASF) describes aqueous pigment pastes comprising water organic solvent, pigment(s) and a copolymer. According to the examples, the content of water in the paste was 20-46.7% by weight.

In the cited documents there is no mentioning of flushing carried out on the aqueous phase per se in which the pigment is synthesized.

EP-A-0,219,323 (which was not published at the filing date of the present application) describes a flushing process wherein an aqueous slurry of organic pigment containing 0.1 to 20% by weight of the pigment is mixed with a non-aqueous medium in the presence of a dispersing agent under vigorous agitation, eg using a high speed, high shear mixer, and the organic pigment dispersion is then separated from residual aqueous phase. The only separation method specifically disclosed is filtration. The filter cake may be washed with water.

According to the present invention a process is provided for the direct preparation of a pigment ink base comprising a pigment that has been made by reaction of starting ingredients, the process comprising converting the pigment to a pigment ink base by a process comprising high shear mixing of the pigment with non-aqueous liquid, in which the starting ingredients are reacted in an agitated aqueous reaction mixture in a vessel to form a reaction product comprising 6 to 15% pigment in mother liquor and conversion of the pigment to the base is conducted entirely within a high shear mixer by subjecting a mixture of the reaction product and a non-aqueous liquid to high shear mixing in the high shear mixer until the pigment is transferred to the non-aqueous phase and an aqueous phase containing water soluble impurities separates from the non-aqueous phase that is a paste containing the pigment, removing the separated aqueous phase from the high shear mixer, washing the said non-aqueous phase within the mixer to remove salts by adding water, mixing and pouring off water several times to form a paste having 10 to 20% residual water and removing the residual water under vacuum and heat or by open mixing to promote natural evaporation, and blending the paste with further non-aqueous liquid to form the pigment ink base while the paste is within the high shear mixer.

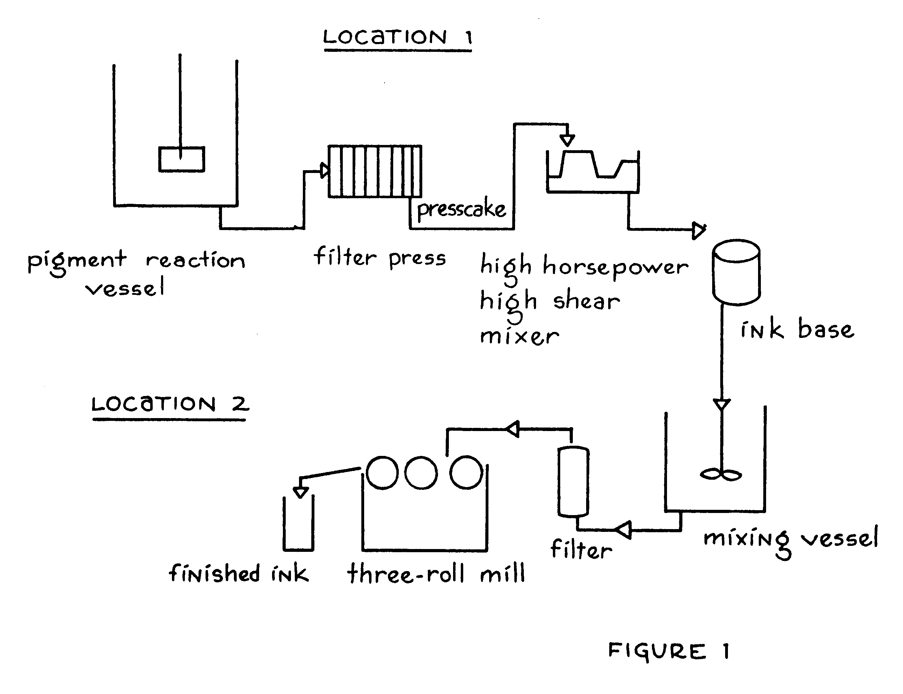

Figure 1 is a flow diagram of the conventional process for manufacturing printing inks.

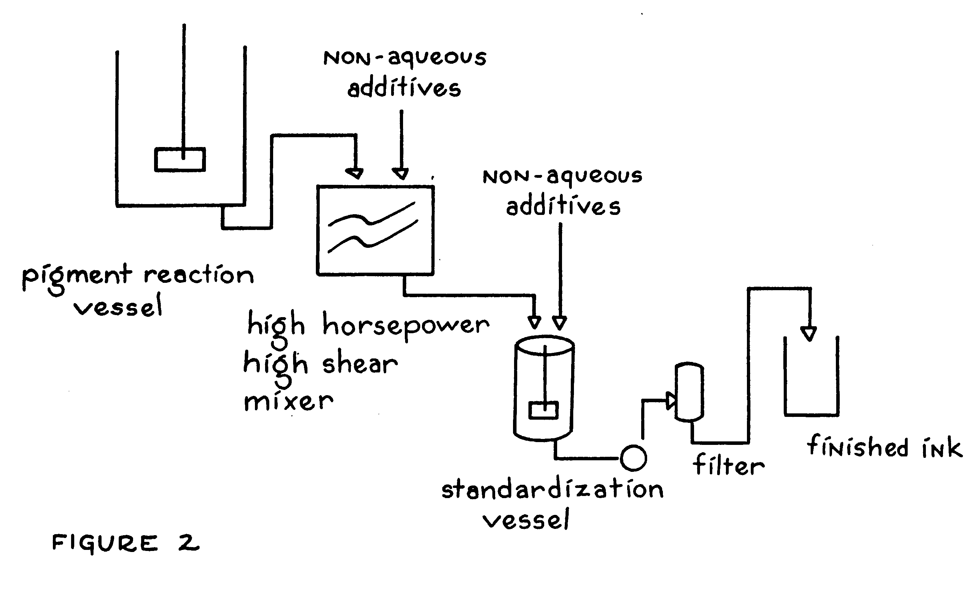

Figure 2 is a flow diagram of the process of this invention for manufacturing printing inks.

A direct process for the production of a printing ink base consists essentially of the steps of (1) reacting the starting ingredients for a pigment in an agitated vessel to obtain a product that contains pigment in mother liquor, (2) placing the product in a high horsepower, high shear mixer to transfer the pigment from the aqueous phase to a non-aqueous phase, and (3) while the material is still in the mixer, adding the necessary ingredients to make a printing ink base that can further be formulated into a printing ink.
(1) The raw materials for making a pigment are fed into a strike tank equipped with a variable speed agitator; a source of heating generally, but not exclusively, steam; a thermometer; and a pH probe to establish acidity or alkalinity of the reaction. The ingredients are mixed for 2 to 6 hours until the reactions required for the manufacture of the pigments are complete.
(2) The reaction product from (1), containing 6 to 15 percent of pigment, is added to a heavy duty mixer, such as a Baker Perkins-type flusher, having high horsepower and high shear mixing. The pigment is transferred from an aqueous phase to a non-aqueous phase by the addition of a suitable printing ink-type varnish. The varnish preferentially wets the pigment and displaces the water which separates and is clear and free of pigment. The separated water is poured off, leaving a soft paste of pigment, varnish, and some residual water. The viscosity of this soft paste is gradually increased by further additions of pigment slurry and some varnishes as needed to aid pigment wetting and water separation. The final product is very heavy and stiff, requiring the horsepower and shear of a heavy duty mixer to produce an excellent dispersion of pigment in the chosen varnish.

The heavy mass is washed to remove soluble salts left from the pigment slurry. Fresh water is added, mixed, and poured off several times until a low conductivity value is reached. The final mass contains pigment, varnish, and 10 to 20 percent of residual water which can be removed under vacuum and heat or by open mixing to promote natural evaporation.

Finally, the mass is reduced to press-ready ink by the addition of more varnishes, solvents, driers, etc.

Typical resins used in the varnishes mentioned above include, but are not limited to, hydrocarbons, alkyds, phenolics, modified phenolics, rosin esters and modified rosin esters, and the like, and mixtures thereof, in an amount between about 45 to 70 percent, and preferably between about 25 to 50 percent, based on the weight of the oils.

A drying oil may be included in order to initially aid water breakout and to improve press characteristics. Typical oils include alkyds, linseed, soya, proprietary drying varnishes, and the like, and their mixtures, in an amount between about 5 and 25 percent, and preferably between about 5 and 10 percent, based on the weight of total varnish.

The process of this invention is "system specific", that is, the specific materials selected and the amount of each depend upon the requirements of each customer. The amounts of the additives likewise vary with the desired properties of the finished ink, but generally they are used in amounts up to about three percent, and preferably about one percent, based on the weight of the finished ink.

The direct process of this invention is applicable to any pigment that is used in printing inks. Specific examples include, but are not limited to, Mono- and Diarylide Yellows, Lithol Rubine, Permanent Red 2B, Lithol Reds, Red Lake C, and Phthalocyanine Blue. It may be used to produce any ink system in which the essential vehicle is immiscible with water, such as for example offset or lithographic, publication gravure, and some packaging gravure and flexographic systems.

The total time that the material is in the flusher, from when the liquid reaction product from the strike tank is placed in the flusher until the finished printing ink is removed for packaging, is about 6 to 12 hours.

The process of this invention may be carried out in a continuous, semi-continuous, or batchwise manner.

As a result of using the direct process described herein, printing inks are obtained that have considerably improved properties. In addition, major economies have been effected in time, energy consumption, and money. By increasing the amounts of solids in the slurry made in the strike tank, there is less effluent, making it easier to transfer the pigment to the non-aqueous phase in the flusher and decreasing the amount of waste material, both liquid and solid, to be removed.

By making the printing ink directly in the flusher, the intermediate filtration and standardization steps are eliminated, saving time, money, and energy. More batches can be made in a given time; less handling of the pigment results in enhancement of color strength; the amount of raw material required is less than the amount required in the conventional process to produce the same strength.

The end products, suitably but not necessarily, offset or lithographic inks, are superior to inks made by the conventional process in properties such as color strength, gloss, transparency, cleanliness of hue, and dispersibility, and the quality of the ink product is consistent.

The process of this invention will be further illustrated by the following examples wherein all parts and percentages are by weight unless otherwise specified.

### Example 1

Pigment Yellow 12 slurry was prepared as follows:
1. To 2400 parts of ice in a make-up tank was added 680 parts of hydrochloric acid (35.5% or 20°Bé), followed by the addition of 350 parts of dichlorobenzidine 100% (as the dihydrochloride). The slurry was stirred for 30 minutes and then cooled down by the further addition of 1700 parts of ice to a temperature of 0 to -5°C. To this was added 10 parts of chelating agent. The slurry was stirred for 10 minutes at 0 to -5°C. To the cold slurry 532 parts of a 38.5% solution of sodium nitrite was added over 2 to 4 minutes. The reactants were stirred for 30 minutes to form the tetrazo of dichlorobenzidine; an excess of nitrite was maintained throughout. The tetrazo so prepared was then added to a strike tank containing 1000 parts of ice.
   To 1600 parts of ice was added 500 parts of a 50 percent solution of sodium hydroxide, followed by the addition of 580 parts of a 70 percent solution of acetic acid. The mixture was stirred for 15 minutes, and then 525 parts of acetoacetanilide was added. The slurry so obtained was stirred for 30 minutes, and then 30 parts of a surface active agent was added.
   The acetoacetanilide slurry was then cooled to 8 to 10°C. by the further addition of 1050 parts of ice. The pH of the slurry was 6.1 to 6.7 at 8 to 10°C.
   The excess nitrite in the tetrazo was destroyed by the addition of 16 parts of sulfamic acid.
   The acetoacetanilide slurry was added to the tetrazo in the strike tank in less than 20 minutes. The yellow-brown suspension obtained in the strike tank was stirred for 30 minutes to complete the reaction. The temperature was 8 to 12°C. throughout and the pH of the slurry after the reaction was 2.6 to 3.3. The yellow-brown slurry was then heated to 45°C. with direct steam, and 450 parts of a 50 percent solution of sodium hydroxide was added to adjust the pH of the slurry to 10.1 to 10.3. During the heat-up the slurry became cleaner and more yellow than yellow-brown.
   To the above slurry was added 73 parts of the sodium salt of rosin dissolved in 250 parts of water at 50°C. The slurry was stirred for 5 minutes and then 37 parts of an inorganic salt was added. The slurry was stirred for 10 minutes more at 45 to 50°C. The final pH of the slurry was 6 to 6.5 with a temperature of 45 to 50°C. The slurry containing 8 to 10 percent of the yellow organic pigment was then available for addition to the high horsepower/high shear mixer.
2. To a Baker-Perkins high horsepower, high shear flusher were added 383 parts of the Yellow 12 strike tank slurry containing 8.7 percent of pigment (33 parts) and 66 parts of a quickset vehicle at 26 to 27 poises viscosity. The mixture was warmed to 50 to 60°C., and mixing was continued until the water separated and the oil-pigment phase collected together (approximately 30 to 60 minutes). The clear water was poured off. The oil phase was very soft.
   Then 191 parts of Yellow 12 slurry (17 parts of pigment) was added, and mixing was continued until the water separated and the oil-pigment phase collected together (approximately 30 minutes). The mass was considerably heavier.
   Then 191 parts of the Yellow 12 slurry (17 parts of pigment) was added, and mixing was continued until the water separated and the oil-pigment phase collected (approximately 15 to 20 minutes). The mass was very stiff. A total of 83 percent of water had been poured off. The mass was washed by adding 1500 parts of fresh tap water, mixing for 5 minutes, and then pouring off the water. This was done a total of 4 times. The conductivity before the washing was 7.554 x 10,000 mhos and after the washing it was 6.94 x 1,000 mhos.

The final washed mass consisted of 50 percent of pigment, 50 percent of varnish, and residual water.

This mass was mixed with 79 parts of quickset vehicle, 2 parts of an anti-skinning agent, and 3 parts of a hexyl carbitol softening agent, resulting in 216 parts of a base ink.

A final cut-back was made by mixing the 216 parts of base ink with 400 parts of gelled quickset varnish, 66 parts of a wax compound, 42 parts of petroleum distillate (boiling average 535°F.), 50 parts of petroleum distillate (boiling average 470°F.), and 59 parts of water, resulting in 833 parts of a press-ready printing ink containing 8.0 percent of pigment.

### Example 2

The procedure of Example 1 was repeated with each of the following pigments instead of Pigment Yellow 12: Lithol Rubine, Permanent Red 2B, Red Lake C, and Phthalocyanine Blue. The results were comparable.

## Claims

1. A process for the direct preparation of a pigment ink base comprising a pigment that has been made by reaction of starting ingredients, the process comprising converting the pigment to a pigment ink base by a process comprising high shear mixing of the pigment with non-aqueous liquid, in which the starting ingredients are reacted in an agitated aqueous reaction mixture in a vessel to form a reaction product comprising 6 to 15% pigment in mother liquor and conversion of the pigment to the base is conducted entirely within a high shear mixer by subjecting a mixture of the reaction product and a non-aqueous liquid to high shear mixing in the high shear mixer until the pigment is transferred to the non-aqueous phase and an aqueous phase containing water soluble impurities separates from the non-aqueous phase that is a paste containing the pigment, removing the separated aqueous phase from the high shear mixer, washing the said non-aqueous phase within the mixer to remove salts by adding water, mixing and pouring off water several times to form a paste having 10 to 20% residual water and removing the residual water under vacuum and heat or by open mixing to promote natural evaporation, and blending the paste with further non-aqueous liquid to form the pigment ink base while the paste is within the high shear mixer.

2. A process according to claim 1 in which after the step of removing the separated aqueous phase and before blending the paste with further non-aqueous liquid, additional aqueous phase is separated from the paste by further high shear mixing and is removed from the paste.

3. A process according to claim 2 in which additional pigment is added to the paste before the further high shear mixing.

4. A process according to any preceding claim in which the reaction product comprising the pigment in mother liquor is transferred from the reaction vessel to the high horsepower, high shear mixer for the application of the said high shear mixing and for any said further high shear mixing.

5. A process according to claim 4 in which the blending of the paste with further non-aqueous liquid is also conducted in the said high shear mixer.

6. A process according to claim 5 in which the base is further diluted with additional non-aqueous liquid in a separate mixer.

7. A process according to any preceding claim in which the printing ink base is subsquently formulated into a printing ink.

8. A process according to any preceding claim in which the pigment is selected from azo pigments and phthalocyanines.

## Patentansprüche

1. Verfahren zur direkten Herstellung einer ein Pigment, das mittels Reaktion von Ausgangsbestandteilen hergestellt wurde, umfassenden Pigmentfarbstoffbase, wobei das Verfahren das Umwandeln des Pigments zur Pigmentfarbstoffbase mittels eines stark scherendes Mischen des Pigments mit einer nicht-wäßrigen Flüssigkeit enthaltenden Verfahrens umfaßt, bei dem die Ausgangsbestandteile in einer gerührten wäßrigen Reaktionsmischung in einem Behälter unter Bildung eines Reaktionsprodukts reagieren gelassen werden, welches 6 bis 15 % Pigment in Mutterlösung enthält, und die Umwandlung des Pigments zu der Base vollständig innerhalb eines stark scherenden Mischers erfolgt, indem:
- die Mischung von Reaktionsprodukt und nicht-wäßriger Flüssigkeit stark scherendem Rühren in den stark scherenden Mischer unterzogen wird, bis das Pigment in die nicht-wäßrige Phase übertragen wird und sich eine wäßrige Phase mit wasserlöslichen Verunreinigungen von der nicht-wäßrigen Phase, bei der es sich um eine das Pigment enthaltende Paste handelt, abtrennt,
- Entfernen der abgetrennten, wäßrigen Phase von dem stark scherenden Mischer,
- Waschen der nicht-wäßrigen Phase innerhalb des Mischers zur Entfernung von Salzen mittels Hinzufügen von Wasser,
- mehrmaliges Mischen und Abschütten des Wassers, so daß eine Paste mit 10 bis 20 % Restwasser gebildet wird,
- Entfernen des Restwassers unter Vakuum und Wärme oder mittels offenen Rührens zur Unterstützung der natürlichen Verdampfung, sowie
- Vermengen der Paste mit weiterer nicht-wäßriger Flüssigkeit zur Bildung der Pigmentfarbstoffbase, wobei sich die Paste in dem stark scherenden Mischer befindet.

2. Verfahren nach Anspruch 1, wobei nach dem Schritt zum Entfernen der abgetrennten wäßrigen Phase und vor dem Vermengen der Paste mit weiterer nicht-wäßriger Flüssigkeit zusätzliche wäßrige Phase von der Paste mittels weiteren stark scherenden Mischens abgetrennt und von der Paste entfernt wird.

3. Verfahren nach Anspruch 2, wobei zusätzliches Pigment vor dem weiteren stark scherenden Mischen der Paste hinzugefügt wird.

4. Verfahren nach einem der vorhergehenden Ansprüche, wobei das das Pigment in Mutterlösung enthaltende Reaktionsprodukt von dem Reaktionsbehälter in einen PS-starken, stark scherenden Mischer zur Anwendung des erwähnten und weiteren stark scherenden Mischens übergeführt wird.

5. Verfahren nach Anspruch 4, wobei das Vermengen der Paste mit weiterer nicht-wäßriger Flüssigkeit ebenfalls in dem stark scherenden Mischer erfolgt.

6. Verfahren nach Anspruch 5, wobei die Base mit zusätzlicher nicht-wäßriger Flüssigkeit in einem getrennten Mischer weiter verdünnt wird.

7. Verfahren nach einem der vorhergehenden Ansprüche, wobei die Druckfarbstoffbase anschließend zu einer Druckfarbe formuliert wird.

8. Verfahren nach einem der vorhergehenden Ansprüche, wobei das Pigment aus Azo-Pigmenten und Phthalocyaninen ausgewählt wird.

## Revendications

1. Procédé de préparation directe d'une base d'encre pigmentée, comprenant un pigment qui a été obtenu par réaction d'ingrédients de départ, le procédé comprenant la conversion du pigment en une base d'encre pigmentée selon un procédé comprenant le mélange à cisaillement intense du pigment avec un fluide non-aqueux, dans lequel les ingrédients de départ sont mis à réagir dans un mélange de réaction aqueux agité dans une cuve pour former un produit de réaction comprenant de 6 à 15 % de pigment dans le liquide mère, et la conversion du pigment en base est effectuée entièrement au sein d'un mélangeur à cisaillement intense en soumettant un mélange du produit de réaction et d'un liquide non-aqueux à un mélange à cisaillement intense dans le mélangeur à cisaillement intense jusqu'à ce que le pigment soit transféré à la phase non-aqueuse et qu'une phase aqueuse contenant des impuretés hydrosolubles se sépare de la phase non-aqueuse qui consiste en une pâte contenant le pigment, l'extraction de la phase aqueuse séparée du mélangeur à cisaillement intense, le lavage de ladite phase non-aqueuse au sein du mélangeur pour extraire des sels en ajoutant de l'eau le mélange et le rejet de l'eau plusieurs fois pour former une pâte ayant de 10 à 20 % d'eau résiduelle et l'extraction de l'eau résiduelle sous vide et en chauffant ou en mélange ouvert pour favoriser l'évaporation naturelle, et le mélange de la pâte avec du liquide non-aqueux additionnel pour former la base d'encre pigmentée, pendant que la pâte est dans le mélangeur à cisaillement intense.

2. Procédé selon la revendication 1, dans lequel après l'étape d'extraction de la phase aqueuse séparée et avant de mélanger la pâte avec le liquide non-aqueux additionnel, une autre phase aqueuse est séparée de la pâte par un mélange à cisaillement intense additionnel et est extraite de la pâte.

3. Procédé selon la revendication 2, dans lequel du pigment additionnel est ajouté à la pâte avant le mélange à cisaillement intense additionnel.

4. Procédé selon l'une quelconque des revendications précédentes, dans lequel le produit de réaction comprenant le pigment dans la liqueur mère est transféré de la cuve de réaction ou mélangeur à cisaillement intense et puissance élevée pour y appliquer ledit mélange à cisaillement intense et pour tout mélange à cisaillement intense ultérieur.

5. Procédé selon la revendication 4, dans lequel le mélange de la pâte avec du liquide non-aqueux additionnel est également effectué dans ledit mélangeur à cisaillement intense.

6. Procédé selon la revendication 5, dans lequel la base est encore diluée par du liquide non-aqueux additionnel dans un mélangeur séparé.

7. Procédé selon l'une quelconque des revendications précédentes, dans lequel la base d'encre pigmentée est ensuite formulée en encre d'imprimerie.

8. Procédé selon l'une quelconque des revendications précédentes, dans lequel le pigment est choisi parmi les pigments azo et les phtalocyamines.
